# DEMANDE DE BREVET EUROPEEN

(11) **EP 0 740 949 A1**
(43) Date de publication de la demande: **06.11.1996**
(21) Numéro de dépôt: 96400910.4
(22) Date de dépôt: 26.04.1996
(51) Int. Cl.: B01D 1/26, B01D 1/04, F28D 9/00

(54) **Echangeur thermique à plaques**

(30) Priorité: 04.05.1995 FR 9505350
(71) Demandeur: PACKINOX, 92084 Paris La Défense (FR)
(72) Inventeur: Da Costa, Carlos, 75012 Paris (FR); Sabin, Dominique, 78580 Herbeville (FR); Merle, Gabriel, 71000 Chalon-sur-Saone (FR)
(74) Mandataire: Lanceplaine, Jean-Claude

(57) **Abrégé**

L'invention a pour objet un échangeur thermique à plaques comportant une enceinte étanche (1) de forme allongée et séparée transversalement en au moins deux tronçons indépendants et un faisceau de plaques (3) disposé dans l'enceinte étanche (1) et formé par un empilement de plaques métalliques munies d'ondulations définissant entre elles des intervalles. Un intervalle sur deux forme un circuit principal longitudinal d'un premier fluide A s'étendant sur toute la longueur du faisceau de plaques (3) et les autres intervalles sont séparés transversalement pour former au moins deux circuits secondaires et indépendants de circulation d'un second fluide B et d'au moins un troisième fluide C et D, perpendiculairement au sens de circulation du premier fluide A.

## Description

La présente invention a pour objet un échangeur thermique à plaques pour fluides et en particulier un échangeur thermique à plaques utilisé pour refroidir ou réchauffer un premier fluide par échange thermique avec au moins un second fluide.

Les échangeurs thermiques sont généralement de deux types.

Le premier type d'échangeur thermique comporte un faisceau de tubes en forme de U ou un faisceau de tubes droits dans lequel circule un des fluides.

Mais ce type d'échangeur est d'une conception coûteuse et le rendement thermique est limité compte tenu que le nombre de tubes dépend de la place disponible qui est dans la plupart des cas restreinte.

Le second type d'échangeur thermique comporte une enceinte étanche dans laquelle est placé un faisceau de plaques disposées jointivement et parallèlement les unes aux autres.

Les plaques constituées de tôles fines, le plus souvent en acier inoxydable, comportent des bords à surface lisse et une partie centrale munie d'ondulations par lesquelles elles sont en contact les unes sur les autres et par lesquelles elles délimitent des canaux formant des circuits de circulation de fluides indépendants.

Ce type d'échangeur thermique à faisceaux de plaques fonctionne avec divers fluides, comme par exemple des liquides ou des gaz ou un mélange biphasique.

Avec ce type d'échangeur à plaques, en faisant circuler les deux fluides dans les circuits respectifs, il se produit un échange thermique entre ces deux fluides ce qui permet de réchauffer l'un des fluides et de refroidir l'autre fluide ou inversement.

Pour certaines applications industrielles, il est nécessaire d'obtenir une différence de température importante du fluide à réchauffer ou à refroidir entre son entrée et sa sortie dans l'échangeur à plaques.

C'est pourquoi plusieurs échangeurs à plaques sont, dans ce cas, placés les uns à la suite des autres.

Chaque échangeur thermique à plaques est constitué d'une enceinte étanche dans laquelle est disposé un faisceau de plaques délimitant deux circuits dont l'un est destiné au fluide principal à réchauffer ou à refroidir.

Ces circuits principaux des différents faisceaux de plaques sont reliés entre eux par des conduites de liaison qui traversent chaque enceinte de manière étanche de façon à réaliser une circulation continue du fluide principal dans les différents faisceaux de plaques.

De ce fait, la surface au sol nécessaire à ce genre d'installation est importante et le coût pour sa fabrication et sa maintenance est également important.

De plus, les conduites de liaison entre les différents échangeurs pour le transfert du fluide principal entre ces échangeurs constituent des zones de perte de charge inutiles et parasites.

L'invention a pour but d'éviter les inconvénients précédemment mentionnés en proposant un échangeur thermique à plaques compact qui permet de diminuer les pertes de charge ainsi que le poids et l'encombrement de l'installation munie d'un tel échangeur thermique à plaques et de contrôler avec précision la température du fluide principal à réchauffer ou à refroidir.

L'invention a donc pour objet un échangeur thermique à plaques, caractérisé en ce qu'il comporte :
- une enceinte étanche de forme allongée et séparée transversalement en au moins deux tronçons indépendants,
- et un faisceau de plaques disposé dans l'enceinte étanche et formé par un empilement de plaques métalliques d'échange thermique munies d'ondulations et définissant entre elles des intervalles, un intervalle sur deux formant un circuit principal longitudinal d'un premier fluide, s'étendant sur toute la longueur du faisceau de plaques et les autres intervalles étant séparés transversalement dans le plan de séparation de l'enceinte étanche pour former au moins deux circuits secondaires et indépendants de circulation d'un second fluide et d'au moins un troisième fluide, perpendiculairement au sens de circulation du premier fluide.

Selon d'autres caractéristiques de l'invention :
- l'enceinte étanche est séparée transversalement par au moins une cloison disposée entre la paroi interne de ladite enceinte et les parois externes du faisceau de plaques,
- le circuit principal est relié à une extrémité du faisceau de plaques à des moyens d'admission du premier fluide et à l'extrémité opposée dudit faisceau de plaques à des moyens de sortie dudit premier fluide après son passage dans le circuit principal,
- au moins un circuit secondaire est séparé pour former deux sous-ciruits de circulation du fluide correspondant à courant alterné.
- les circuits secondaires sont séparés les uns des autres par des profilés en forme de I s'étendant sensiblement sur toute la largueur du faisceau de plaques et comportant une âme verticale et deux ailes horizontales et parallèles, soudées sur des bords transversaux des plaques du faisceau formant lesdits circuits secondaires,
- chaque plaque du faisceau comporte au niveau des intervalles définissant le circuit principal, sur chacun de ses bords longitudinaux, un pli longitudinal disposé en vis-à-vis du pli de la plaque adjacente, lesdits plis longitudinaux s'étendant sensiblement sur toute la largeur de chaque circuit secondaire et les bords libres de ces plis étant reliés entre eux par une soudure linéaire étanche,
- les extrémités libres des plis sont reliés à l'extrémité adjacente des profilés par une pièce de liaison,
- chaque plaque du faisceau comporte au niveau des intervalles définissant un circuit secondaire, sur ses bords transversaux situés à l'extrémité du faisceau de plaques, un pli transversal disposé en vis-à-vis du pli de la plaque adjacente, les bords libres de ces plis étant reliés entre eux par une soudure linéaire étanche,
- les coins des plaques des extrémités du faisceau de plaques sont reliés entre eux par une pièce d'angle de liaison.

Les caractéristiques avantages de l'invention apparaîtront au cours de la description qui va suivre, donnée uniquement à titre d'exemple et faite en référence aux dessins annexés, sur lesquels :
- la figure 1 est une vue en perspective partiellement arrachée d'un échangeur à plaques selon l'invention,
- la figure 2 est une vue schématique en coupe longitudinale de l'échangeur à plaques selon l'invention,
- la figure 3 est une vue schématique de dessus et en perspective montrant partiellement la séparation des circuits secondaires de l'échangeur à plaques selon l'invention,
- la figure 4 est une vue en perspective d'un organe de séparation et d'une pièce de liaison,
- la figure 5 est une vue en perspective d'une pièce de liaison,
- la figure 6 est une vue schématique en perspective et de dessus montrant partiellement un angle de faisceau de plaques de l'échangeur à plaques de l'invention,
- la figure 7 est une vue en perspective d'une pièce d'angle de liaison.

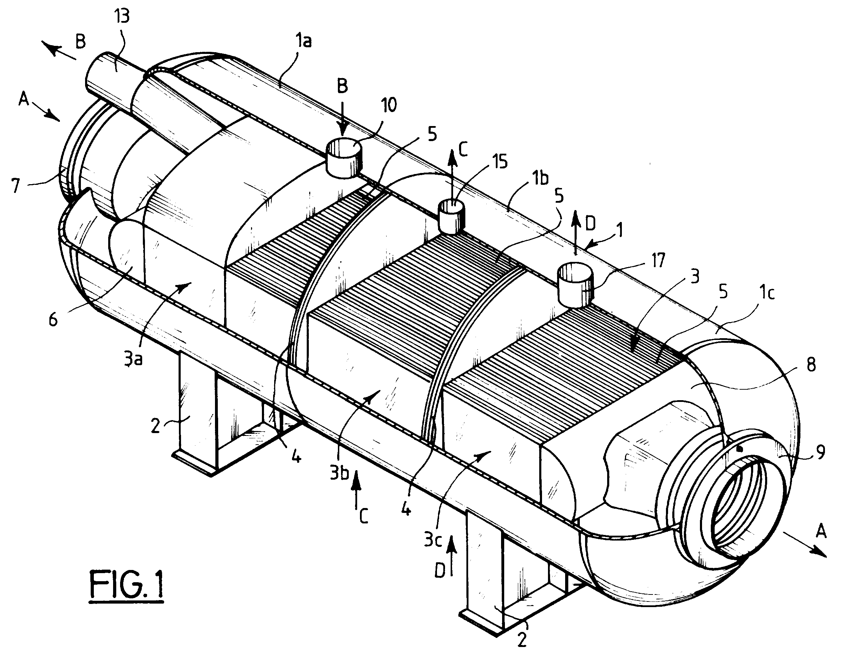

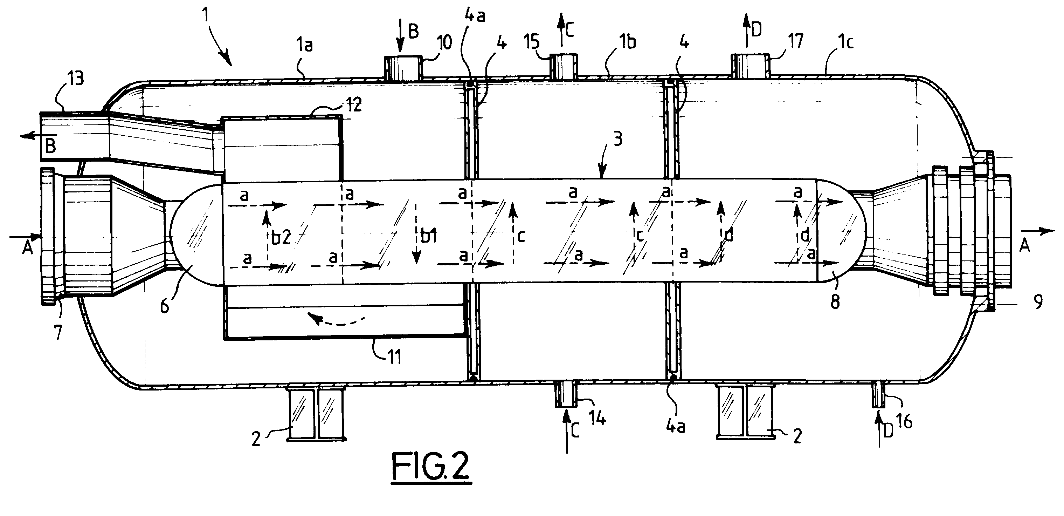

Sur les figures 1 et 2, on a représenté un échangeur thermique à plaques destiné à réaliser un échange thermique entre un premier fluide A constitué par un liquide ou un gaz ou un mélange biphasique et N fluides circulant transversalement par rapport au premier fluide et constitués chacun par un liquide ou un gaz ou un mélange biphasique.

Cet échangeur thermique est destiné par exemple à refroidir le premier fluide A par les N fluides ou à réchauffer ce premier fluide A.

Dans l'exemple de réalisation représenté sur les figures, le premier fluide A est refroidi par trois fluides respectivement B, C et D.

L'échangeur thermique comprend une enceinte étanche 1 de forme allongée et de section par exemple circulaire. Cette enceinte étanche est munie de pieds 2 destinés à reposer sur une surface de réception non représentée.

A l'intérieur de l'enceinte 1 est disposé un faisceau de plaques désigné dans son ensemble par la référence 3 et de forme générale parallélépipédique qui constitue la surface d'échange nécessaire au transfert thermique entre les fluides A, B, C et D.

L'enceinte étanche 1 est divisée en n tronçons indépendants et dans l'exemple de réalisation représenté sur les figures 1 et 2, en trois tronçons indépendants, respectivement 1a, 1b et 1c, par deux cloisons 4 verticales et parallèles reliées à la paroi interne de l'enceinte 1 et aux parois externes du faisceau de plaques 3, comme cela sera décrit ultérieurement.

Le faisceau de plaques 3 est formé, comme représenté sur les figures 1, 3 et 6, par un empilement de plaques 5 métalliques de faible épaisseur et par exemple en acier inoxydable, munies d'ondulations 5a.

Les plaques 5 du faisceau de plaques 3 sont parallèles les unes aux autres et, dans l'exemple de réalisation représenté sur les figures, sont disposées verticalement. Ces plaques 5 peuvent être disposées horizontalement.

Les plaques 5 définissent entre-elles des intervalles. Un intervalle sur deux forme un circuit principal a longitudinal pour le premier fluide A, s'étendant sur toute la longueur du faisceau de plaques 3 et les autres intervalles sont séparés transversalement, dans le plan de séparation de l'enceinte étanche 1 c'est-à-dire au niveau des cloisons 4, pour former un premier circuit b secondaire pour le fluide B, un second circuit c secondaire pour le fluide C, et un troisième circuit d secondaire pour le fluide D.

Le sens de circulation de chaque fluide secondaire B, C et D est perpendiculaire au sens de circulation du fluide principal A.

Ainsi, le faisceau de plaques 3 est divisé, dans l'exemple de réalisation représenté sur les figures 1 et 2, en trois sous-faisceaux de plaques, respectivement 3a, 3b et 3c, constitués chacun par un empilement de plaques 5, les plaques de chaque sous-faisceaux étant reliées aux plaques situées dans le même plan du sous-faisceau adjacent par des moyens de liaison qui seront décrits ultérieurement.

Le circuit principal a pour le premier fluide A est relié, à une extrémité du faisceau de plaques 3, à des moyens d'admission du premier fluide A et à l'extrémité opposée dudit faisceau de plaques 3 à des moyens de sortie dudit premier fluide A après son passage dans ce circuit principal.

Les moyens d'admission du premier fluide A sont formés par un collecteur 6 s'étendant sur toute la section d'extrémité du faisceau de plaques 3 et raccordé à une tubulure d'arrivée 7 dudit premier fluide A traversant de manière étanche l'enceinte 1.

Les moyens de sortie du premier fluide A sont formés par un collecteur 8 s'étendant sur toute la section d'extrémité du faisceau de plaques 3 et raccordé à une tubulure de sortie 9 dudit premier fluide A traversant de manière étanche l'enceinte 1.

Selon l'exemple de réalisation représenté sur les figures 1 et 2, les intervalles du premier circuit secondaire b pour la circulation du fluide B sont séparés pour former deux sous-circuits secondaires, respectivement bl et b2, de circulation de ce fluide secondaire b à courant alterné.

L'entrée du premier sous-circuit bl débouche directement à l'intérieur du tronçon la correspondant de l'enceinte étanche 1 qui comporte une arrivée 10 du fluide correspondant.

La sortie du premier sous-circuit b1 est reliée par un collecteur 11 à l'entrée du second sous-circuit b2.

La sortie du second sous-circuit b2 est reliée par un collecteur 12 à une tubulure 13 de sortie du fluide secondaire B correspondant, traversant de manière étanche l'enceinte 1.

Cette tubulure 13 est par exemple parallèle à la tubulure 7 d'entrée du premier fluide A dans le circuit principal a du faisceau de plaques 3.

Mais, la tubulure 13 peut être perpendiculaire à la tubulure 7 d'entrée du premier fluide A.

Ainsi, cette disposition à double circulation du second fluide B par rapport au premier fluide A permet d'augmenter l'échange thermique entre ces deux fluides.

Cette double circulation peut être réalisée avec les fluides C et/ou D.

L'entrée du second circuit secondaire c débouche directement à l'intérieur du tronçon 1b de l'enceinte 1 qui comporte une arrivée 14 du fluide C et la sortie du second circuit secondaire c débouche par exemple à l'opposée de l'entrée, directement à l'intérieur du tronçon 1b qui comporte une sortie 15 du fluide C.

L'entrée du troisième circuit secondaire d débouche directement à l'intérieur du tronçon 1c de l'enceinte 1 qui comporte une arrivée 16 du fluide D et la sortie du troisième circuit secondaire d débouche par exemple à l'opposée de l'entrée, directement à l'intérieur du tronçon 1c qui comporte une sortie 17 du fluide D.

Les entrées 14 et 16 sont, dans l'exemple de réalisation représenté sur les figures 1 et 2, situées à la partie inférieure de l'enceinte 1 et les sorties 15 et 17 sont situées à la partie supérieure de cette enceinte 1. Une disposition inverse est également possible.

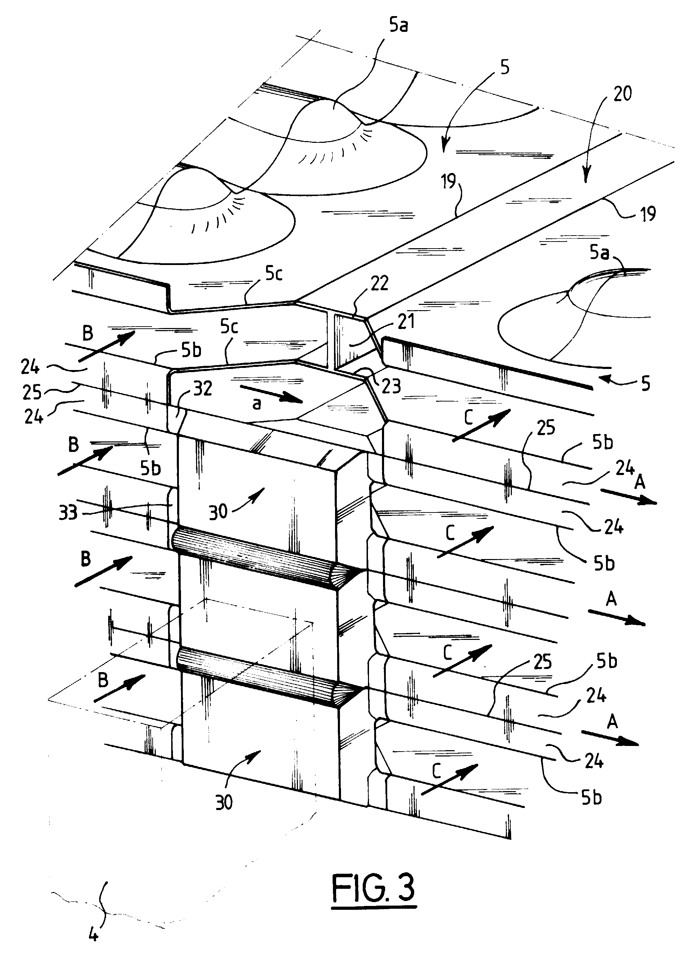

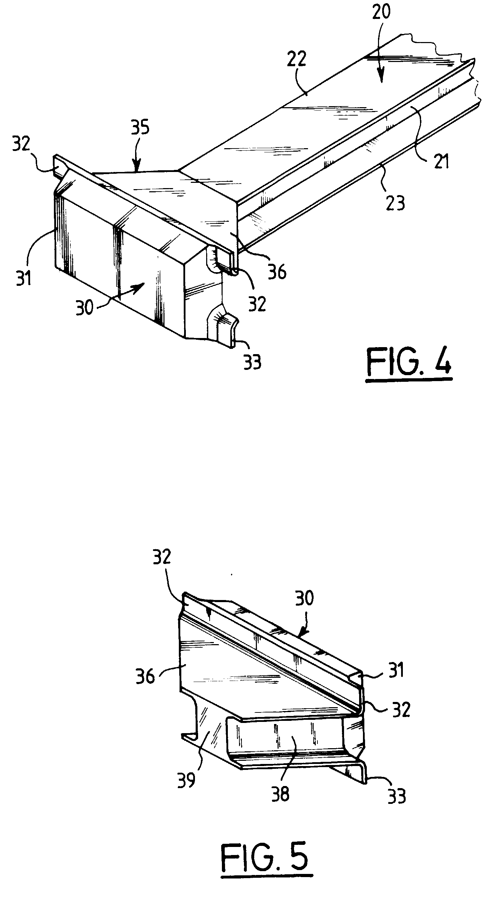

En se reportant aux figures 3 à 5, on va décrire maintenant la séparation entre les circuits secondaires b et c, la séparation entre les circuits secondaires c et d et entre les sous-circuits secondaires bl et b2 étant identique.

Les circuits secondaires b et c sont séparés par des profilés 20 en forme de I, parallèles les uns aux autres, disposés chacun dans un intervalle du faisceau de plaques 3 délimitant lesdits circuits secondaires b et c.

Chaque profilé 20 comporte une âme centrale 21 et deux ailes 22 et 23 parallèles et perpendiculaires à l'âme 21. Les bords des deux ailes 22 et 23 sont fixés par des soudures linéaires 19 sur les bords transversaux des plaques 5 adjacentes du faisceau 3.

Comme représenté sur la figure 3, chaque profilé 20 ne s'étend pas jusqu'aux bords longitudinaux 5b des plaques 5 du faisceau 3 et la portion 5c de chaque plaque 3 située entre le bord longitudinal 5b et le profilé 20 forme, avec un plan vertical passant par l'âme 21 de ce profilé 20, un angle déterminé pour le positionnement d'une pièce de liaison 30 qui sera décrite par la suite.

Ainsi que représenté à la figure 3, chaque plaque 5 comporte au niveau des intervalles définissant le circuit principal a, sur chacun de ses bords longitudinaux 5b, un pli longitudinal 24 disposé en vis-à-vis du pli 24 de la plaque 5 adjacente. Les plis 24 s'étendent sensiblement sur toute la largeur de chaque circuit secondaire b, c, et d et les bords libres de ces plis 24 sont reliés entre eux par une soudure linéaire étanche 25.

Les extrémités libres des plis 24 sont reliées à l'extrémité adjacente des profilés 20 par la pièce de liaison 30.

Comme représenté sur les figures 3 à 5, chaque pièce de liaison 30 comporte, d'une part, une plaque verticale 31 et, d'autre part, un caisson 35 disposé sur la face interne de la plaque verticale 31.

Les pièces de liaison 30 sont conçues pour le soudage sur celles-ci des tôles fines constituant les plaques 5 du faisceau 3.

La plaque verticale 31 comporte sur ses bords latéraux deux rebords opposés, respectivement 32 et 33, de profil correspondant au profil des extrémités libres des plis 24.

Le caisson 35 est formé de deux plaques horizontales 36 et 37 et parallèles ayant chacune la forme d'un trapèze et entre lesquelles sont disposées des plaques verticales, respectivement 38 et 39, de façon à fermer complètement le caisson 35.

La plaque verticale 31 a une hauteur sensiblement égale à deux intervalles des plaques 5 du faisceau 3 et la hauteur du caisson 35 est sensiblement égale à la hauteur d'un intervalle.

Comme cela apparaît à la figure 3, les rebords 32 et 33 des bords latéraux de la plaque verticale 31 de chaque pièce de liaison 30 sont fixés par soudage sur les extrémités libres des plis 24 adjacents, tandis que les bords latéraux des plaques horizontales 36 et 37 sont fixés par soudage sur les bords inclinés 5c des plaques 5 adjacentes et la plaque d'extrémité 39 du caisson 35 est fixée par soudage sur l'extrémité libre du profilé 20 adjacent.

Ainsi, pour chaque pièce de liaison 30, la plaque verticale 31 couvre un intervalle correspondant au circuit secondaire b, c, ou d et un demi-intervalle supérieur et un demi-intervalle inférieur correspondant au circuit principal a.

Les bords longitudinaux des plaques verticales 31 des pièces de liaison 30 superposées sont donc jointifs et soudés entre eux de telle manière que ces pièces de liaison forment une surface continue.

Ces pièces de liaison 30 ainsi que les profilés 20 et les plis 24 des plaques 5 du faisceau 3 permettent de réaliser l'étanchéité du circuit principal a et des circuits secondaires indépendants b, c, et d.

L'épaisseur des ailes 22 et 23 des profilés 20 et des différentes plaques 31, 36, 37, 38 et 39 des pièces de liaison 30 est sensiblement égale à l'épaisseur des plaques 5 du faisceau 3 de façon à assurer la continuité du circuit principal a et de chaque circuit secondaire b, c, et d.

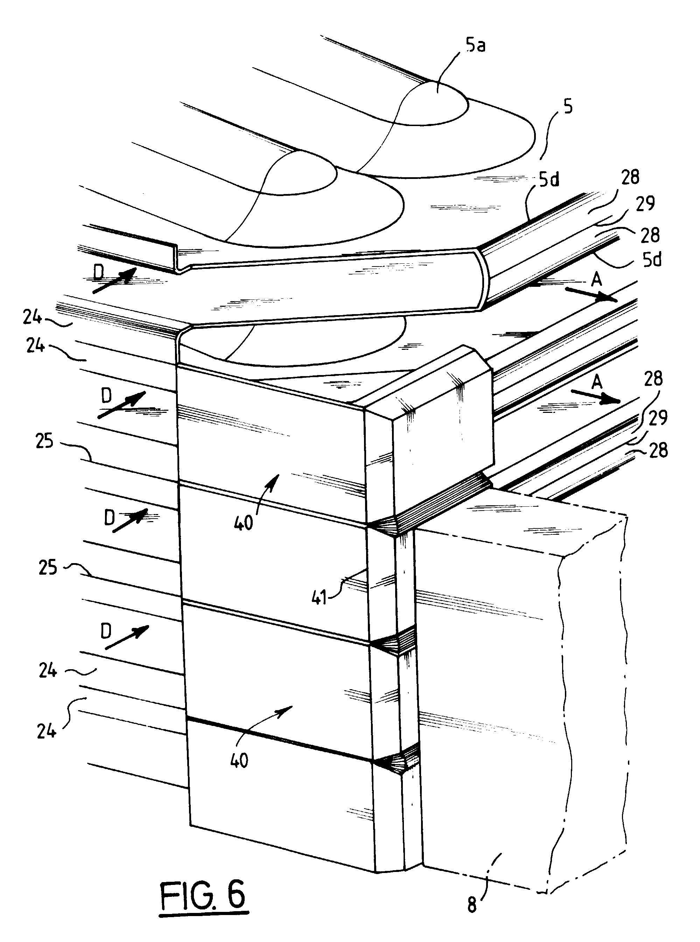

Comme représenté à la figure 6, chaque plaque 5 du faisceau 3 comporte, au niveau des intervalles définissant les circuits secondaires d'extrémité, sur ses bords transversaux 5d situés à l'extrémité du faisceau de plaques 3, un pli transversal 28 disposé en vis-à-vis du pli 28 de la plaque 5 adjacente et les bords libres de ces plis 28 sont reliés entre eux par une soudure linéaire 29 étanche. Les coins des plaques 5 des extrémités du faisceau de plaques 3 sont inclinés et reliés entre-eux par des pièces d'angle 40 de liaison.

Les pièces d'angle 40 sont conçues pour le soudage sur celles-ci des tôles fines constituant les plaques 5 du faisceau 3.

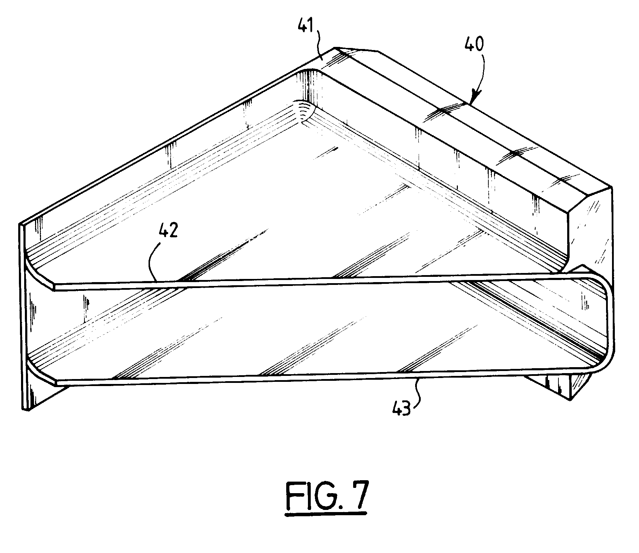

Comme représenté à la figure 7, chaque pièce d'angle 40 comporte, d'une part, une plaque verticale 41 en forme d'équerre et, d'autre part, deux plaques 42 et 43 horizontales et parallèles, disposées sur la face interne des deux branches de la plaque verticale 41 en forme d'équerre.

Ainsi, pour chaque pièce d'angle 40, la plaque verticale 41 couvre un intervalle correspondant au circuit secondaire b ou d, et un demi-intervalle supérieur et un demi-intervalle inférieur correspondant au circuit principal a.

Les bords latéraux de chaque branche de la plaque verticale 41 en forme d'équerre sont jointifs et fixés par soudage respectivement sur les extrémités libres des plis longitudinaux 24 adjacents et sur les extrémités libres des plis transversaux 28 adjacents et les bords libres de chaque plaque horizontale 42 et 43 sont fixés par soudage sur les bords des plaques 5 adjacentes du faisceau 3.

Les bords longitudinaux des pièces d'angle 40 superposées sont soudés entre eux pour former une surface d'angle continue.

Ainsi, au niveau des extrémités du faisceau de plaques 3, l'étanchéité des circuits secondaires b et d est obtenue grâce aux plis 28, aux soudures 29 et aux pièces d'angle 40.

Les plis longitudinaux 24 et transversaux 28, les profilés 20, les pièces de liaison 30 et les pièces d'angle 40 ainsi que les soudures entre ces différents éléments permettent d'assurer l'étanchéité entre le circuit principal a et les circuits secondaires b, c, et d et entre les circuits secondaires b, c, et d et contribuent à assurer la rigidité de l'ensemble du faisceau de plaques 3.

Les pièces de liaison 30, les pièces d'angle et les profilés 20 situés sur les bords du faisceau de plaques 3 permettent la fixation par soudure des cloisons 4 et la fixation également par soudure du collecteur d'entrée 6 et du collecteur de sortie 8 du premier fluide A et des collecteurs 11 et 12 de guidage du fluide secondaire correspondant dans le cas d'une circulation à plusieurs passes du fluide secondaire correspondant.

L'enveloppe étanche 1 assure la séparation des fluides entre eux à l'aide des cloisons 4 soudées sur le pourtour du faisceau de plaques 3 et en contact étanche par exemple par un joint torique circulaire 4a, sur la paroi interne de l'enveloppe 1.

Ainsi, le faisceau de plaques 3 et les cloisons 4 forment un ensemble rigide qui peut se dilater et coulisser dans l'enveloppe 1, sans engendrer de contraintes mécaniques induites par une différentielle de dilatation thermique.

Ce principe de construction et d'assemblage permet de placer en série dans une même enveloppe plusieurs faisceaux de plaques et d'obtenir une différentielle importante entre la température d'entrée du fluide principal et sa température de sortie, tout en diminuant l'encombrement de l'installation.

L'enveloppe assure l'étanchéité vers l'atmosphère et permet la pressurisation externe de chaque tronçon du faisceau de plaques par le fluide qui débouche directement dans le tronçon correspondant.

## Revendications

1. Echangeur thermique à plaques, caractérisé en ce qu'il comporte :
- une enceinte étanche (1) de forme allongée, et séparée transversalement en au moins deux tronçons (1a, 1b, 1c) indépendants,
- et un faisceau de plaques (3) disposé dans l'enceinte étanche (1) et formé par un empilement de plaques (5) métalliques d'échange thermique munies d'ondulations (5a) et définissant entre elles des intervalles, un intervalle sur deux formant un circuit principal a longitudinal d'un premier fluide A, s'étendant sur toute la longueur du faisceau de plaques (3) et les autres intervalles étant séparés transversalement dans le plan de séparation de l'enceinte étanche (1) pour former au moins deux circuits b, c et d secondaires et indépendants de circulation d'un second fluide B et d'au moins un troisième fluide C et D, perpendiculairement au sens de circulation du premier fluide A.

2. Echangeur thermique selon la revendication 1, caractérisé en ce que l'enceinte étanche (1) est séparée transversalement par au moins une cloison (4) disposée entre la paroi interne de ladite enceinte (1) et les parois externes du faisceau de plaques (3).

3. Echangeur thermique selon la revendication 1, caractérisé en ce que le circuit principal a est relié à une extrémité du faisceau de plaques (3) à des moyens (6, 7) d'admission du premier fluide A et à l'extrémité opposée dudit faisceau de plaques (3) à des moyens (8, 9) de sortie dudit premier fluide A après son passage dans ce circuit principal.

4. Echangeur thermique selon la revendication 3, caractérisé en ce que les moyens d'admission du premier fluide A sont formés par un collecteur (6) s'étendant sur toute la section d'extrémité du faisceau de plaques (3) et raccordé à une tubulure (7) d'arrivée du premier fluide A traversant de manière étanche l'enceinte (1).

5. Echangeur thermique selon la revendication 3, caractérisé en ce que les moyens de sortie du premier fluide A sont formés par un collecteur (8) s'étendant sur toute la section d'extrémité du faisceau de plaques (3) et raccordé à une tubulure (9) de sortie dudit premier fluide A traversant de manière étanche l'enceinte (1).

6. Echangeur thermique selon la revendication 1, caractérisé en ce qu'au moins un circuit secondaire b est séparé pour former deux sous-circuits bl et b2 de circulation du fluide correspondant à courant alterné.

7. Echangeur thermique selon la revendication 6, caractérisé en ce que la sortie du premier sous-circuit bl communique avec l'entrée du second sous-circuit b2 par un collecteur (11) de transfert du fluide B correspondant entre les deux sous-circuits.

8. Echangeur thermique selon la revendication 7, caractérisé en ce que l'entrée du premier sous-circuit bl débouche directement à l'intérieur du tronçon (la) correspondant de l'enceinte étanche (1) qui comporte une arrivée (10) du fluide secondaire B correspondant.

9. Echangeur thermique selon la revendication 7, caractérisé en ce que la sortie du second sous-circuit b2 est reliée par un collecteur (12) à une tubulure (13) de sortie du fluide secondaire B correspondant traversant de manière étanche l'enceinte (1).

10. Echangeur thermique selon la revendication 1, caractérisé en ce que l'entrée dudit au moins second circuit c et d débouche directement à l'intérieur du tronçon (1b, 1c) correspondant de l'enceinte étanche (1) qui comporte une arrivée (14, 16) du fluide secondaire C et D correspondant et la sortie dudit au moins second circuit c et d débouche à l'opposée de l'entrée, directement à l'intérieur du tronçon (1b, 1c) correspondant de l'enceinte étanche (1) qui comporte une sortie (15, 17) du fluide correspondant.

11. Echangeur thermique selon la revendication 1, caractérisé en ce que les circuits secondaires b, c et d sont séparés les uns des autres par des profilés (20) en forme de I comportant une âme centrale (21) et deux ailes (22, 23) parallèles et perpendiculaires à ladite âme (21) soudées sur les bords transversaux des plaques (5) adjacentes du faisceau (3).

12. Echangeur thermique selon l'une quelconque des revendications précédentes, caractérisé en ce que chaque plaque (5) du faisceau (3) comporte, au niveau des intervalles définissant le circuit principal a et sur chacun de ses bords longitudinaux (5b), un pli longitudinal (24) disposé en vis-à-vis du pli (24) de la plaque (5) adjacente, lesdits plis (24) s'étendant sensiblement sur toute la largeur de chaque circuit secondaire et les bords libres de ces plis (24) étant reliés entre eux par une soudure (25) linéaire étanche.

13. Echangeur thermique selon l'une quelconque des revendications précédentes, caractérisé en ce que les extrémités libres des plis (24) sont reliées à l'extrémité adjacente des profilés (20) par une pièce de liaison (30) .

14. Echangeur thermique selon la revendication 13, caractérisé en ce que chaque pièce de liaison (30) comporte, d'une part, une plaque verticale (31) et, d'autre part, un caisson (35) disposé sur la face interne de la plaque verticale (31) et formé de deux plaques (36, 37) horizontales et parallèles entre lesquelles sont disposées des plaques verticales (38, 39).

15. Echangeur thermique selon les revendications 13 et 14, caractérisé en ce que les bords latéraux de la plaque verticale (31) de chaque pièce de liaison (30) sont fixés par soudage sur les extrémités libres des plis (24) adjacents, les bords latéraux des plaques horizontales (36, 37) sont fixés par soudage sur les bords (5c) des plaques (5) adjacentes et la plaque d'extrémité (39) est fixée par soudage sur l'extrémité libre du profilé (20) adjacent.

16. Echangeur thermique selon la revendication 13, caractérisé en ce que les bords longitudinaux des plaques verticales (31) des pièces des liaison (30) sont soudés entre eux et lesdites pièces de liaison (30) forment une surface continue.

17. Echangeur thermique selon l'une quelconque des revendications précédentes, caractérisé en ce que chaque plaque (5) du faisceau (3) comporte, au niveau des intervalles définissant un circuit secondaire d'extrémité b et d et sur ses bords transversaux (5d) situés à l'extrémité du faisceau de plaques (3), un pli transversal (28) disposé en vis-à-vis du pli (28) de la plaque (5) adjacente, les bords libres de ces plis (28) étant reliés entre eux par une soudure linéaire (29) étanche.

18. Echangeur thermique selon l'une quelconque des revendications précédentes, caractérisé en ce que les coins des plaques (5) des extrémités du faisceau de plaques (3) sont reliés entre eux par une pièce d'angle (40) de liaison.

19. Echangeur thermique selon la revendication 18, caractérisé en ce que chaque pièce (40) de liaison comporte, d'une part, une plaque verticale (41) en forme d'équerre et deux plaques (42, 43) horizontales et parallèles disposées sur les faces internes des deux branches de la plaque verticale (41) en forme d'équerre.

20. Echangeur thermique selon les revendications 18 et 19, caractérisé en ce que les bords latéraux de chaque branche de la plaque (41) en forme d'équerre sont fixés par soudage respectivement sur les extrémités libres des plis longitudinaux (24) et sur les extrémités libres des plis transversaux (28) adjacents et le bord libre de chaque plaque horizontale (42, 43) est fixé par soudage sur les bords des plaques (5) adjacentes du faisceau (3) .

21. Echangeur thermique selon les revendications 18 et 19, caractérisé en ce que les bords longitudinaux de la plaque verticale (41) en forme d'équerre des pièces d'angle (40) de liaison sont soudés entre eux et lesdites pièces d'angle (40) de liaison forment une surface d'angle continue.
